# EUROPEAN PATENT SPECIFICATION

(11) **EP 3 924 182 B1**
(45) Date of publication and mention of the grant of the patent: **22.07.2026**
(21) Application number: 19913226.7
(22) Date of filing: 19.11.2019
(51) Int. Cl.: B32B 27/08, B32B 27/16, B32B 27/32, B32B 27/18, B32B 7/10, B32B 27/22, B32B 27/30, C08J 5/18, C08L 23/06

(54) **METALLIZED POLYETHYLENE FILMS AND RELATED STRUCTURES**
METALLISIERTE POLYETHYLENFOLIEN UND ZUGEHÖRIGE STRUKTUREN
FILMS DE POLYÉTHYLÈNE MÉTALLISÉS ET STRUCTURES ASSOCIÉES

(30) Priority: 02.02.2019 WO PCT/CN2019/074583
(43) Date of publication of application: 22.12.2021
(73) Proprietor: DOW GLOBAL TECHNOLOGIES LLC, Midland, MI 48674 (US)
(72) Inventor: GUPTE, Kaustubh, Mumbai 400081 (IN); CHEN, Hongyu, Shanghai 20203 (CN); DU, Zhe, Shanghai 201203 (CN); PAN, Jianping, Shanghai 201203 (CN); YUN, Xiaobing, Shanghai 201203 (CN); WENG, Xilun, Shanghai 201203 (CN)
(74) Representative: Boult Wade Tennant LLP
(86) International application number: PCT/CN2019/119496
(87) International publication number: WO 2020/155795

(56) References cited:
- EP-A1- 3 013 579
- CN-A- 101 115 795
- CN-A- 102 884 117
- CN-A- 109 070 558
- US-A- 4 508 786
- US-A- 4 975 315
- US-A- 5 096 630
- US-A1- 2017 232 706

## Description

### FIELD

The present disclosure relates to metallized polyethylene films for packaging applications.

### BACKGROUND

In some applications, packaging films must exhibit good barrier properties against moisture and/or oxygen to protect the contents of the package. While plastic packaging materials offer toughness, lighter weight and a level of design flexibility that glass and metal cannot meet, most plastics, including particularly polyolefins, have a permeability to oxygen and water vapor that make them unacceptable by themselves as packaging film. One approach to provide improved barrier to polyolefin-based film structures has been to provide a thin metallized layer on a surface of the film. The thin metallized layer provides the film with significantly enhanced barrier properties against oxygen and water vapor, contributing the dominant mass transfer resistance during permeation.

The metallization can be done in different ways, wherein the evaporationdeposition method has been well established and commercialized. In this process, metals (Al, Cu) are evaporated through heating boats in vacuum chamber, and allowed to deposit onto the surface of substrates like plastic films. Commonly used polymeric films are biaxially oriented polyethylene terephthalate (BOPET), biaxially oriented polypropylene (BOPP), and cast polypropylene (CPP). For example, the metallized films may be laminated with an exterior printed polyethylene terephthalate (PET) film and an interior polyethylene sealant film.

Metallized films require good adhesion to the metallized surface of the metalized film in some applications. For example, the metallized side of the metalized film may be printed on or may have to be laminated to other layers. However, adhesion to the metalized polyethylene films has been problematic limiting use of such films in the market. Thus, a need remains for a metalized polyethylene packaging film that shows good adhesion of other materials to the metallized surface. EP 3013579 relates to a metalized polyethylene film with improved metal adhesion.

### SUMMARY

The present disclosure reflects a discovery that metal stearate and/or its byproduct stearic acid are a cause of poor adhesion to the metalized surface of a metallized polyethylene film. Metal stearates (typically calcium stearate or zinc stearate) are commonly used as neutralizers in the production of polyethylenes using Ziegler-Natta catalysts, including many commercially available LLDPE and HDPE materials. In particular, these stearate and/or stearic acid molecules have been found to quickly migrate to the surface causing a substantial decrease in surface energy of the metallized surface. This is particularly problematic as the metallized films are wound on a roll and thus migration to either surface can contaminate the metal surface.

Thus, disclosed herein is a film comprising at least one layer comprising polyethylene and a metal layer, wherein the film has no more than 300 ppm of metal stearate and no more than 50 ppm stearic acid based on total weight of the film; wherein the film is a multilayer film and a first layer comprises linear low density polyethylene; wherein the film further comprises a core layer adjacent to the first layer on an opposite side of the first layer from the metal layer, wherein the core layer comprises a polyethylene having a density from 0.935 to 0.970 g/cm³ or combinations thereof and from 0 to 40 weight percent of a low density polyethylene, wherein the polyethylene having a density from 0.935 to 0.970 g/cm³ is a high density polyethylene; wherein the film further comprises a sealant layer which is on the opposite side of the film from the metal layer and is an outside surface of the film, wherein the sealant layer comprises linear low density polyethylene and from 0 to 40 weight percent low density polyethylene. Also disclosed herein is such a film comprising at least one layer comprising polyethylene and a metal layer wherein the metal layer of at least 38 dyne/cm one week after metallization. Also disclosed herein is an article comprising such a film laminated to a substrate.

### DETAILED DESCRIPTION

Disclosed herein is a film comprising at least one polyethylene containing layer and a metal layer, and articles such as laminates or packages comprising such films. These layers can be in adhering contact.

### Polyethylene containing film layers

The films disclosed herein have at least one layer comprising polyethylene. There can be one layer comprising polyethylene. Alternatively, there can be two or more layers comprising polyethylene. These layers can be in adhering contact. There can be three (or three or more) layers comprising polyethylene. When there are three (or three or more) layers comprising polyethylene , the layer adjacent the metal layer is called herein a first layer, the layer opposite the metal layer on the outside of the film is called a sealant layer, and a layer or layers between the first and sealant layers is a core layer or core layers. When there is only one layer comprising polyethylene, any of the polyethylene compositions discussed herein as first, core or sealants layers can be used. When there are only two layers comprising polyethylene, any combinations of first layer and core layer, first layer and sealant layer, or core layer and sealant layer can be used. When there are two or more polyethylene containing layers, each polyethylene containing layer can be immediately adjacent to at least one other polyethylene containing layer, or an adhesive layer or other intermediary layer can be used between the two or more polyethylene containing layers..

The film and each of the layers comprising polyethylene in the film can be characterized by the absence (0 ppm) or substantial absence of metal stearate (e.g. calcium stearate or zinc stearate) and stearic acid. Specifically, the amount of metal stearate (e.g. calcium stearate or zinc stearate) in the film can be no more than 300 ppm, no more than 250 ppm, no more than 200 ppm, no more than 100 ppm, or no more than 50 ppm based on total weight of the film. The amount of metal stearate (e.g. calcium stearate or zinc stearate) in a polyethylene layer in the film can be no more than 300 ppm, no more than 250 ppm, no more than 200 ppm, no more than 100 ppm, or no more than 50 ppm based on weight of that polyethylene layer. The inventors have found that amounts of metal stearate are tolerable in smaller amounts than those limits stated above. Thus, there may be found in the polyethylene layer, metal stearate (e.g. calcium stearate or zinc stearate) in amounts of 0.01 ppm or more, 0.1 ppm or more, or 1 ppm or more based on total weight of the layer. Similarly there may be found in the film, metal stearate (e.g. calcium stearate or zinc stearate) in amounts of 0.01 ppm or more, 0.1 ppm or more, or 1 ppm or more based on total weight of the film. Such amounts will not cause substantial deterioration of surface energy of the metal layer up to 1, up to 2, up to 3 or up to 4 week periods after metallization. The amount of stearic acid in the film can be no more than 50, no more than 40, or no more than 30 ppm based on total weight of the film The amount of stearic acid in a polyethylene layer of the film can be no more than 50, no more than 40, or no more than 30 ppm based on total weight of the polyethylene layer. The inventors have found that amounts of stearic acid are tolerable in smaller amounts. Thus, there may be found in the polyethylene layer stearic acid in amounts of 0.01 ppm or more, 0.1 ppm or more, or 1 ppm or more based on total weight of the layer. Similarly there may be found in the film, metal stearate (e.g. calcium stearate or zinc stearate) in amounts of 0.01 ppm or more, 0.1 ppm or more, or 1 ppm or more based on total weight of the film.

While stearates are to be avoided, the layers can comprise small amounts (e.g. less than 1000, less than 800, less than 600, less than 500, or less than 400 ppm based on total weight of the layer) of non-stearate catalyst neutralizers, such as hydrotalcite (e.g. DHT4V/DHT4A from KISUMA).

A first layer can comprises a polyethylene. The polyethylene of the first layer can be a linear low density polyethylene (LLDPE). This LLDPE can be a single site catalyzed polyethylene (such as, and without limitation, m-LLDPE). The first layer can further comprise one or more additional polyethylenes, such as a low density polyethylene (LDPE). The additional polyethylene can be present in amounts of from 0, from 1, from 5, or from 10 up to about 40, up to 30, or up to 20 weight percent based on total weight of the first layer. The first layer can further comprise additives, such as, for example, antioxidants, ultraviolet light stabilizers, thermal stabilizers, slip agents, antiblock, pigments or colorants, processing aids, crosslinking catalysts, flame retardants, fillers and foaming agents. When used in combination with a second polyethylene containing layer such as a core layer or sealant layer, the first layer is the layer that is metalized and in that instance is advantageously free of slip agents but may include anti-block agents (e.g. talc, silicon dioxide), anti-oxidants, and processing aids (e.g. PEA-3S from AVI polymers). For example, an anti-block agent can be present in the first layer in amounts of at least 1000 or 1500 ppm to 5000 ppm. The combined amount of additives can be less than 10 or less than 5 weight percent based on total weight of the first layer.

A polyethylene containing layer can comprise a middle density polyethylene (MDPE), a high density polyethylene (HDPE) or combinations thereof. This layer can be a core layer. This layer can further comprise one or more additional polyethylene (such as LDPE) in amounts of from 0, from 1, or from 5 up to 40, up to 30, or up to 20 weight percent based on total weight of the layer. This composition can be useful particularly as a core layer. This layer can also comprise additives as mentioned for the first layer, including particularly anti-oxidants, in the amounts listed for the first layer. The combined amount of additives can be less than 10 or less than 5 weight percent based on total weight of this layer.

When used as an inner or core layer, additives such as slip agents and anti-block agents typically will not be used. This layer can be adjacent the first layer on an opposite side of the first layer from the metal layer.

The layer comprising middle density polyethylene (MDPE), a high density polyethylene (HDPE) or combinations thereof can have a tensile modulus in the machine direction of at least 200, at least 250, at least 300, at least 350 or at least 400 MPa as measured by tensile machine (e.g. Type5943, INSTRON) following ASTM D882.

A layer comprising polyethylene can comprise a linear low density polyethylene (LLDPE). The LLDPE can be a single site catalyzed polyethylene (e.g. mLLDPE). This layer can further comprise one or more additional polyethylene, such as a low density polyethylene (LDPE). The additional polyethylene can be present in amounts of from 0, from 1, from 5, or from10 up to about 40, up to 30, or up to 20 weight percent based on total weight of this layer. This layer can also comprise additives as mentioned for the first layer in the amounts listed for the first layer. This can be an outer layer of the film. This layer can be a sealant layer. In that use as an outer or sealant layer, the layer may advantageously in certain embodiments include an anti-blocking agent. For example, an anti-block agent may be present in amounts of at least 1000 or at least 1500 ppm up to 5000 ppm in certain embodiments. In addition, in that use anti-slip agents (e.g. erucamide) may be helpful. For example, anti-slip agents may be present in amounts of from 100 or from 200ppm to 1000 or to 800 ppm. The combined amount of additives can be less than 10 or less than 5 weight percent based on total weight of this layer (e.g. the outer or sealant layer).

The polyethylene films can be cast films or extruded films. The films can be oriented. The films can be blown films (which can contribute to orientation). The films can be monoaxially oriented. The films can be biaxially oriented. The films can be co-extruded, e.g. coextruded blown, oriented films. The films can be treated on a surface that is to be metallized. Examples of treatments include flame treatment, corona treatment, and plasma treatment. For example, a blown film may be corona treated on the outer layer and then split using a side slitter. The surface energy of the film on the surface to be metallized before metallization can be at least 42 dyne/cm, or at least 46 dyne/cm.

The film before metallization can have a machine direction tensile modulus of at last 300 or at least 350 MPa as measured by tensile machine (e.g. Type5943, INSTRON) following ASTM D882. A stiffer film can facilitate metallization.

### Metallization and the Metalized film

The polyethylene film can be metallized by any known method for metallizing polyethylene films. For example, the metal layer can be applied using vacuum metallization. This can include providing a metal source and evaporating it in a vacuum environment causing it to condense on the surface of the film.

Suitable metals include Al, Zn, Au, Ag, Cu, Ni, Cr, Ge, Se, Ti, Sn, or oxides thereof. The metal layer can be formed from aluminum or aluminum oxide (Al₂O₃).

The thickness of the metal layer according to certain embodiments can be at least 10, at least 20, or at least 30 nanometers and no more than 100, no more than 90, no more than 80, no more than 70, or no more than 60 nanometers.

After metallization the metallized film can conveniently be stored in rolls. In this process, the metallized surface layer is in contact with a polyethylene layer on the opposite side of the film. Storage of the films can be at temperatures in the range of 20-25 °C and 10-20% relative humidity.

The overall thickness of the metalized film can be at least 10, at least 20, or at least 30 microns. The overall thickness of the metallized film according to certain embodiments is no more than 100, no more than 80, no more than60, or no more than 40 microns.

The metallized film can have an optical density (OD) of at least 2, at least 2.1, at least 2.2, or at least 2.3 and no more than 2.8, no more than 2.7, no more than 2.6, or no more than 2.5. In some embodiments, the OD is 2.4. The optical density of a metallized film (e.g., a multilayer structure comprising a polyethylene film with a metal layer deposited on it) can be measured using an optical density meter (Model No. LS177 from Shenzhen Linshang Technology).

The metallized film can retain a surface energy of the metallized surface of at least 38, at least 40, at least or 42 dyne/cm for at least one or at least two weeks from the metallization.

The metallized films as described above can be printed on and/or laminated to a substrate such as another film. The other film may be another polymeric material such as a polyester (e.g. polyethylene terephthalate or PET). The excellent retained surface energy of the present metallized films avoids problems previously seen with lamination or printing on metalized polyethylenes.

The metalized film (with or without lamination to another film) can be used to form articles such as packages. Examples of packages that can be formed from multilayer structures of the present invention can include flexible packages, pouches, stand-up pouches, and pre-made packages or pouches. The multilayer films of the present invention can be used for food packages. Examples of food that can be included in such packages include meats, cheeses, cereal, nuts, juices, sauces, and others. Such packages can be formed using techniques known to those of skill in the art based on the teachings herein and based on the particular use for the package (e.g., type of food, amount of food).

### Test Methods and Definitions

Unless stated to the contrary, implicit from the context, or customary in the art, all parts and percents are based on weight, all temperatures are in °C, and all test methods are current as of the filing date of this disclosure.

The term "composition," as used herein, refers to a mixture of materials which comprises the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or a polymer mixture, including mixtures of polymers that are formed in situ during polymerization.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term "in adhering contact" and like terms mean that one facial surface of one layer and one facial surface of another layer are in touching and binding contact to one another such that one layer cannot be removed from the other layer without damage to the interlayer surfaces (i.e., the in-contact facial surfaces) of both layers.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

"Polyethylene" or "ethylene-based polymer" shall mean polymers comprising a majority amount (>50 mol %) of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392). LDPE resins typically have a density in the range of 0.916 to 0.935 g/cm3.

The term "LLDPE", includes both resin made using the traditional Ziegler-Natta catalyst systems and chromium-based catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm3. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/cm3 and up to about 0.970 g/cm3, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm3, which are generally prepared with Ziegler-Natta catalysts, chrome catalysts, or single-site catalysts including, but not limited to, bis-metallocene catalysts and constrained geometry catalysts.

In general, the compositions, methods, and articles can alternatively comprise, consist of, or consist essentially of, any ingredients, steps, or components herein disclosed. The compositions, methods, and articles can additionally, or alternatively, be formulated, conducted, or manufactured so as to be devoid, or substantially free, of any ingredients, steps, or components not necessary to the achievement of the function or objectives of the present claims. The film and article as disclosed herein includes combinations of the embodiments discussed herein.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). Moreover, stated upper and lower limits can be combined to form ranges (e.g. "at least 1 or at least 2 weight percent" and "up to 10 or 5 weight percent" can be combined as the ranges "1 to 10 weight percent", or "1 to 5 weight percent" or "2 to 10 weight percent" or "2 to 5 weight percent").

The surface energy of the film and metallized film is monitored along with time following ASTM Std. D2578, by testing the wetting tension on the tested substrates through wettability of the testing fluid.

EXAMPLES (Example 1 is not according to the present invention defined in the claims) Materials used are shown in Table 1.

**Table 1 PE grades in the examples**

| Resin | Density (g/cc) | Melt Index (190°C, g/10min) | Calcium stearate | Antioxidant | Slip agent |
|---|---|---|---|---|---|
| LLDPE A | 0.912 | 0.85 | No | Yes | No |
| HDPE B | 0.955 | 0.85 | No | Yes | No |
| ELITE^{™} 5960G HDPE* | 0.962 | 0.85 | Yes | Yes | No |
| DOWLEX^{™} 2038.68G LLDPE* | 0.935 | 1.0 | Yes | Yes | No |
| DOWLEX^{™} 2045 LLDPE* | 0.920 | 1.0 | Yes | Yes | No |
| ELITE^{™} AT 6202 LLDPE* | 0.908 | 0.85 | No | Yes | Yes |
| Exceed 1018MF LLDPE** | 0.918 | 1.0 | No | Yes | Yes |
| Exceed 2018MB LLDPE** | 0.918 | 2.0 | No | Yes | No |
| DOW^{™} LDPE 150E* (LDPE below) | 0.921 | 0.25 | No | No | No |

| | | | | | |
|---|---|---|---|---|---|
| *commercially available from The Dow Chemical Company **commercially available from ExxonMobil Chemical Company. | | | | | |

Film is made on a commercial 7-layer blown film line, with feeders adapted for mono-layer or 3-layer blown film. The film width is 400mm. The in-line corona treatment brings the film surface energy higher than 50 dyne/cm. For mono-layer examples, the blown film conditions are kept the same to give thickness of 50um and blow up ratio (BUR) of 2.3. For 3-layer examples, the blown film conditions are kept the same for the examples to give a total thickness of 30um and a layer ratio of 1:3:1 (outer: core: inner) and BUR of 2.3. In some examples, additional additives are introduced besides those provided as part of the commercially available resins, as noted in Table 2. These additives are mixed into the formulation through LDPE master batch previously compounded, respectively. The films are in-line corona treated to bring the film surface energy to greater than 50 dyne/cm.

Films are surface treated on the outer layer a second time prior to metallization to ensure the surface energy of the film is higher than 46dyne/cm prior to metallization. The metallization on PE films is done in a lab scale vacuum deposition chamber (from Shenyang Vacuum Technology Institute), where a substrate holder fixes the PE film with outer layer facing outside. An Al wire (with 99.9999% purity) is inserted into the container of resistance heater (heating boat). At the vacuum level reaching 3×10-3Pa, the heating boat is turned on to melt and evaporate Al. The current is adjusted to induce a deposition rate at 40 A/s. A spinning component drives a constant speed spinning of the substrate to facilitate a more uniform deposition. A thickness monitor (quartz crystal microbalance (QCM)) is used to monitor the in-situ thickness and deposition rate. The metallized sample is taken out after ventilating the chamber.

The optical density (OD) of the metallized film is measured using spectrophotometer under visible light set-up. The transmittance (T, %) is used to derive the optical density value.

The metallized films are then stacked by inner side of respective PE films and stored at ambient conditions (23oC and 15% RH) between polished and cleansed glass plates with controlled load of 0.2 N/cm2 to ensure a solid contact between the flexible films.

At pre-set time intervals, the surface energy of the Al coated outer surface of each metallized PE film is tested according to ASTM Std. D2578. The value is reported in the Table 2 from the average of 5 samples.

The calcium stearate content is determined by analyzing Ca content with ICP-OES (Inductively Coupled Plasma Optical Emission Spectrometry). The calcium element is determined by its specific wavelength in the mass spectrum. Standard solutions are made in appropriate concentration range for Ca element.

The stearic acid content is analyzed by extracting the additive from films using CH₂Cl₂, followed by filtration and analyzing with LC-MS (Liquid chromatography-mass spectrometry). Standard solutions are made in appropriate concentration range of stearic acid.

**Table 2 Film formulations and surface energy performance**

| | Layer | Formulation | Ratio | Thickness (um) | Surface energy (dyne/cm) | | | Calcium Stearate (ppm) | Stearic acid (ppm) |
|---|---|---|---|---|---|---|---|---|---|
| | | | | | day 3 | day 7 | day 14 | | |
| Comparative Example 1 - Monolayer with CaStearate | Mono | DOWLEX^{™}2045G (100%) | 1 | 50 | <34 | <34 | <34 | >1250 | >300 |
| Comparative Example 2 - Core layer with CaStearate | Outer | ELITE^{™} AT 6401 (85%) + LDPE (15%) + 5000ppm silicon oxide anti-blocking agent | 1 | 6 | 36 | 34 | <34 | >675 | >120 |
| | Core | ELITE^{™} 5960G (50%) + DOWLEX^{™}2038.68G (40%) + LDPE (10%) | 3 | 18 | | | | | |
| | Inner | Exceed 2018 (90%) + LDPE (10%) + 500ppm slip agent | 1 | 6 | | | | | |
| Comparative Example 3-Core layer with CaStearate | Outer | LLDPE A (85%) + LDPE (15%) | 1 | 6 | 35 | <34 | <34 | >525 | >65 |
| | Core | ELITE^{™} 5960G (70%) + LDPE (30%) | 3 | 18 | | | | | |
| | Inner | Exceed 1018MF (90%) + LDPE (10%) | 1 | 6 | | | | | |
| Comparative Example 4 - Core layer with CaStearate | Outer | **LLDPE** A (85%) + LDPE (15%) | 1 | 6 | 36 | <34 | <34 | >750 | >90 |
| | Core | ELITE^{™} 5960G (100%) | 3 | 18 | | | | | |
| | Inner | Exceed 1018MF (90%) + LDPE (10%) | 1 | 6 | | | | | |
| Example 1 | Mono | LLDPE A (100%) | 1 | 50 | >46 | 46 | 41 | 0 | 0 |
| Example 2 | Outer | **LLDPE** A (85%) + LDPE (15%) | 1 | 6 | >46 | 45 | 41 | 0 | 0 |
| | Core | HDPE B (80%) + LDPE (20%) | 3 | 18 | | | | | |
| | Inner | **LLDPE** A (90%) + LDPE (10%) | 1 | 6 | | | | | |
| Example 3 | Outer | LLDPE A (85%) + LDPE (15%) | 1 | 6 | 45 | 43 | 39 | 0 | 0 |
| | Core | HDPE B (80%) + LDPE (20%) | 3 | 18 | | | | | |
| | Inner | Exceed 1018MF (90%) + LDPE (10%) | 1 | 6 | | | | | |
| Example 4 | Outer | LLDPE A (85%) + LDPE (15%) | 1 | 6 | >46 | 44 | 39 | 0 | 0 |
| | Core | HDPE B (100%) | 3 | 18 | | | | | |
| | Inner | ELITE^{™} AT 6202 (90%) + LDPE (10%) | 1 | 6 | | | | | |
| Example 5 | Outer | **LLDPE** A (85%) + LDPE (15%) | 1 | 6 | 44 | 42 | 38 | 0 | 0 |
| | Core | HDPE B (80%) + LDPE (20%) + 800ppm DHT4V* | 3 | 18 | | | | | |
| | Inner | **LLDPE** A (90%) + LDPE (10%) | 1 | 6 | | | | | |

| | | | | | | | | | |
|---|---|---|---|---|---|---|---|---|---|
| *DHT4V is a hydrotalcite-like acid scavenger for polymer processing from Kisuma | | | | | | | | | |

All the metallized films had surface energy >46 dyne/cm as just produced (Day 0). The comparative example 1 is a mono-layer film made from Dowlex 2045G, which contains calcium stearate as catalyst neutralizer. The comparative example 2 has a high density PE core layer made with polyethylenes which used calcium stearate as catalyst neutralizer in both Elite 5960G and Dowlex 2038.68G. This calcium stearate additive and its stearic acid byproduct form catalyst neutralization is believed responsible for the surface energy decay. The migratory composition stearic acid and also stearate plays a role in the fast surface energy decay through the low density inner and outer layer onto metal surfaces. Comparative examples 3 and 4 are identical except that the core layer of example 4 is solely high density polyethylene. Examples 2-5 demonstrate that as long as calcium stearate was not present surface energy was retained at acceptable levels for two weeks. Notably, example 5 added DHT4V (a catalyst neutralizer other than calcium stearate) into the middle layer of example 2. As long as stearate is not in the formulation, the surface energy retains.

This disclosure further encompasses the following aspects.

Aspect 1. A film comprising at least one layer comprising polyethylene and a metal layer, wherein the film has no more than, preferably less than, 300 ppm of metal stearate and no more than, preferably less than, 50 ppm stearic acid based on total weight of the film
wherein the film is a multilayer film and a first layer comprises linear low density polyethylene
wherein the film further comprises a core layer adjacent to the first layer on an opposite side of the first layer from the metal layer, wherein the core layer comprises a polyethylene having a density from 0.935 to 0.970 g/cm³ or combinations thereof and from 0 to 40 weight percent of a low density polyethylene, wherein the polyethylene having a density from 0.935 to 0.970 g/cm³;
wherein the film further comprises a sealant layer which is on the opposite side of the film from the metal layer and is an outside surface of the film, wherein the sealant layer comprises linear low density polyethylene and from 0 to 40 weight percent low density polyethylene.

Aspect 3. The film of Aspect 1 further wherein the first layer further comprises up to 40 weight percent of low density polyethylene.

Aspect 4. The film of Aspect 3 wherein the first layer further comprises one or more of an anti-oxidant, an anti-block agent, or a processing aid.

Aspect 7. The film of aspect 1 wherein the core layer further comprises one or more of antioxidants and non-stearate catalyst neutralizers.

Aspect 10. The film of any one of the preceding aspects wherein the at least one layer is surface treated before metallization to form the metal layer.

Aspect 11. The film of any one of the preceding aspects wherein the at least one layer is a cast film, a coextruded, blown film, an oriented film (e.g. a monoaxially oriented film or a biaxially oriented film).

Aspect 12. The film of any one of the preceding aspects having a thickness of 10 to 100 microns and an optical density of 2.0 to 2.8.

Aspect 13. The film of anyone of the preceding aspects wherein the at least one layer comprising polyethylene has a modulus in a machine direction of at least 300 MPa.

Aspect 15. The film of any one of the preceding aspects having a surface energy of a surface of the metal layer of at least 38 dyne/cm one week after metallization.

Aspect 16. The film of aspect 15 wherein the film has been stored in rolls for a week after metallization.

Aspect 17. The film of aspect 15 or 16 wherein the film has been stored e at temperatures in the range of 20-25 °C and 10-20% relative humidity.

Aspect 18. The film of any one of the preceding aspects comprising
a. the first layer comprising linear low density polyethylene and up to 40 weight percent based on the first layer of low density polyethylene, and optionally comprising one or more of an anti-oxidant, an anti-block agent, or a processing aid;
b. a core layer adjacent to the first layer on an opposite side of the first layer from the metal layer, the core layer comprising a polyethylene having a density from 0.935 to 0.970 g/cm3 and from 0 to 40 weight percent of a low density polyethylene, and optionally further comprising one or more of antioxidants and non-stearate catalyst neutralizers; and
c. a sealant layer which is on the opposite side of the film from the metal layer and is an outside surface of the film wherein the sealant layer comprises linear low density polyethylene and from 0 to 40 weight percent low density polyethylene.

Aspect 19. The film of any one of the preceding aspects wherein there is printing on the metallized surface.

Aspect 20. An article comprising the film of any one of the preceding aspects laminated to a substrate.

## Claims

1. A film comprising at least one layer comprising polyethylene and a metal layer, wherein the film has no more than 300 ppm of metal stearate and no more than 50 ppm stearic acid based on total weight of the film;
wherein the film is a multilayer film and a first layer comprises linear low density polyethylene;
wherein the film further comprises a core layer adjacent to the first layer on an opposite side of the first layer from the metal layer, wherein the core layer comprises a polyethylene having a density from 0.935 to 0.970 g/cm³ or combinations thereof and from 0 to 40 weight percent of a low density polyethylene, wherein the polyethylene having a density from 0.935 to 0.970 g/cm³ is a high density polyethylene;
wherein the film further comprises a sealant layer which is on the opposite side of the film from the metal layer and is an outside surface of the film, wherein the sealant layer comprises linear low density polyethylene and from 0 to 40 weight percent low density polyethylene.

2. The film of claim 1 further wherein the first layer further comprises up to 40 weight percent of low density polyethylene.

3. The film of claim 1 or 2 wherein the first layer further comprises one or more of an anti-oxidant, an anti-block agent, or a processing aid.

4. The film of claim 1 wherein the core layer further comprises one or more of antioxidants and non-stearate catalyst neutralizers.

5. The film of any one of the preceding claims wherein the at least one layer is a cast film, a coextruded, blown film, or an oriented film.

6. The film of any one of the preceding claims having a thickness of 10 to 100 microns and an optical density of 2.0 to 2.8, measured using a spectrophotometer under visible light set-up.

7. The film of any one of the preceding claims wherein the at least one layer comprising polyethylene has a tensile modulus in a machine direction of at least 300 MPa, as measured by tensile machine following ASTM D882.

8. The film of any one of the preceding claims having a surface energy of a surface of the metal layer of at least 38 dyne/cm one week after metallization, as determined by ASTM Std. D2578.

9. The film of any one of the preceding claims in the form of a roll, such that the metal layer is in contact with a polyethylene layer on the opposite side of the film.

10. An article comprising the film of any one of claims 1-9 laminated to a substrate.

## Patentansprüche

1. Folie, umfassend mindestens eine Schicht, umfassend Polyethylen, und eine Metallschicht, wobei die Folie nicht mehr als 300 ppm Metallstearat und nicht mehr als 50 ppm Stearinsäure basierend auf dem Gesamtgewicht der Folie aufweist;
wobei die Folie eine mehrschichtige Folie ist und eine erste Schicht lineares Polyethylen niedriger Dichte umfasst;
wobei die Folie ferner eine Kernschicht umfasst, die an die erste Schicht auf einer gegenüberliegenden Seite der ersten Schicht von der Metallschicht angrenzt, wobei die Kernschicht ein Polyethylen umfasst, das eine Dichte von 0,935 bis 0,970 g/cm³ oder Kombinationen davon und von zu 0 bis 40 Gew.-% ein Polyethylen niedriger Dichte aufweist, wobei das Polyethylen, das eine Dichte von 0,935 bis 0,970 g/cm³ aufweist, ein Polyethylen hoher Dichte ist;
wobei die Folie ferner eine Dichtstoffschicht umfasst, die sich auf der gegenüberliegenden Seite der Folie von der Metallschicht befindet und eine äußere Oberfläche der Folie ist, wobei die Dichtstoffschicht lineares Polyethylen niedriger Dichte und von zu 0 bis 40 Gew.-% Polyethylen niedriger Dichte umfasst.

2. Folie nach Anspruch 1, ferner wobei die erste Schicht bis zu 40 Gew.-% Polyethylen niedriger Dichte umfasst.

3. Folie nach Anspruch 1 oder 2, wobei die erste Schicht ferner eines oder mehrere von einem Antioxidationsmittel, einem Antiblockmittel oder einem Verarbeitungshilfsmittel umfasst.

4. Folie nach Anspruch 1, wobei die Kernschicht ferner eines oder mehrere von Antioxidantien und Nicht-Stearat-Katalysatorneutralisatoren umfasst.

5. Folie nach einem der vorstehenden Ansprüche, wobei die mindestens eine Schicht eine Gießfolie, eine koextrudierte Blasfolie oder eine gestreckte Folie ist.

6. Folie nach einem der vorstehenden Ansprüche, die eine Dicke von 10 bis 100 Mikron und eine optische Dichte von 2,0 bis 2,8, gemessen unter Verwendung eines Spektrophotometers unter Aufbau mit sichtbarem Licht, aufweist.

7. Folie nach einem der vorstehenden Ansprüche, wobei die mindestens eine Schicht, umfassend Polyethylen, einen Zugmodul in einer Maschinenrichtung von mindestens 300 MPa, gemessen durch eine Zugprüfmaschine nach ASTM D882, aufweist.

8. Folie nach einem der vorstehenden Ansprüche, die Oberflächenenergie einer Oberfläche der Metallschicht von mindestens 38 dyn/cm eine Woche nach einer Metallisierung, wie durch ASTM Std. D2578 bestimmt, aufweist.

9. Folie nach einem der vorstehenden Ansprüche in Form einer Rolle, derart, dass die Metallschicht mit einer Polyethylenschicht auf der gegenüberliegenden Seite der Folie in Kontakt steht.

10. Erzeugnis, umfassend die Folie nach einem der Ansprüche 1 bis 9, das an ein Substrat laminiert ist.

## Revendications

1. Film comprenant au moins une couche comprenant du polyéthylène et une couche métallique, dans lequel le film n'a pas plus de 300 ppm de stéarate métallique et pas plus de 50 ppm d'acide stéarique sur la base du poids total du film ;
dans lequel le film est un film multicouche et une première couche comprend du polyéthylène linéaire basse densité ;
dans lequel le film comprend en outre une couche centrale adjacente à la première couche sur un côté opposé de la première couche par rapport à la couche métallique, dans lequel la couche centrale comprend un polyéthylène ayant une masse volumique allant de 0,935 à 0,970 g/cm³ ou des combinaisons de celui-ci et de 0 à 40 pour cent en poids d'un polyéthylène basse densité, dans lequel le polyéthylène ayant une masse volumique allant de 0,935 à 0,970 g/cm³ est un polyéthylène haute densité ;
dans lequel le film comprend en outre une couche d'étanchéité qui est sur le côté opposé du film par rapport à la couche métallique et est une surface extérieure du film, dans lequel la couche d'étanchéité comprend du polyéthylène linéaire basse densité et de 0 à 40 pour cent en poids de polyéthylène basse densité.

2. Film selon la revendication 1, dans lequel la première couche comprend en outre jusqu'à 40 pour cent en poids de polyéthylène basse densité.

3. Film selon la revendication 1 ou 2, dans lequel la première couche comprend en outre un ou plusieurs parmi un antioxydant, un agent anti-blocage, ou un auxiliaire de traitement.

4. Film selon la revendication 1, dans lequel la couche centrale comprend en outre un ou plusieurs parmi des antioxydants et des neutralisants de catalyseurs non-stéarate.

5. Film selon l'une quelconque des revendications précédentes, dans lequel l'au moins une couche est un film coulé, un film coextrudé, un film soufflé, ou un film orienté.

6. Film selon l'une quelconque des revendications précédentes, ayant une épaisseur de 10 à 100 micromètres et une densité optique de 2,0 à 2,8, mesurée à l'aide d'un spectrophotomètre sous configuration de lumière visible.

7. Film selon l'une quelconque des revendications précédentes, dans lequel l'au moins une couche comprenant du polyéthylène a un module de traction dans un sens machine d'au moins 300 MPa, tel que mesuré par une machine de traction suivant la norme ASTM D882.

8. Film selon l'une quelconque des revendications précédentes, ayant une énergie de surface d'une surface de la couche métallique d'au moins 38 dyne/cm une semaine après la métallisation, telle que déterminée par la norme ASTM D2578.

9. Film selon l'une quelconque des revendications précédentes, sous forme de rouleau, de telle sorte que la couche métallique est en contact avec une couche de polyéthylène sur le côté opposé du film.

10. Article comprenant le film selon l'une quelconque des revendications 1 à 9 stratifié à un substrat.
